# EUROPÄISCHE PATENTSCHRIFT

(11) **EP 3 663 645 B1**
(45) Veröffentlichungstag und Bekanntmachung des Hinweises auf die Patenterteilung: **07.07.2021**
(21) Anmeldenummer: 19214014.3
(22) Anmeldetag: 06.12.2019
(51) Int. Cl.: F21V 33/00, H04B 10/116, F21Y 113/13, F21Y 115/10

(54) **BELEUCHTUNGSVORRICHTUNG**
LIGHTING DEVICE
DISPOSITIF LUMINEUX

(30) Priorität: 07.12.2018 DE 102018131458
(43) Veröffentlichungstag der Anmeldung: 10.06.2020
(73) Patentinhaber: ledxon GmbH, 84144 Geisenhausen (DE)
(72) Erfinder: Garufo, Gabriel, 84028 Landshut (DE); Lomberg, Markus, 85419 Mauern (DE)
(74) Vertreter: Lichtnecker, Markus Christoph

(56) Entgegenhaltungen:
- WO-A1-2016/128967
- US-A1- 2015 003 837

## Beschreibung

Die Erfindung betrifft eine Beleuchtungsvorrichtung mit einer ansteuerbaren Lichtquelle, vorzugsweise LED, und eine Steuerungsvorrichtung, die dazu ausgebildet ist, mittels der Lichtquelle Informationseinheiten zu übertragen.

Verfahren zur optischen Datenübertragung sind grundsätzlich bekannt. So können z.B. mittels Li-Fi (light fidelity) Daten auf kurzen Distanzen übertragen werden. Ferner können Daten z.B. mittels VLC (Visible Light Communication) ausgetauscht werden. Bei diesen Verfahren wird die Intensität des emittierten Lichts moduliert, um die Daten zu übertragen.

Produkte, bei denen Li-Fi oder VLC zum Einsatz kommen, sind verhältnismäßig kostenintensiv.

Es sind auch Datenübertragungsverfahren bekannt, bei denen das so genannte Manchester-Coding zum Einsatz kommt. Hierbei ist das resultierende Signal gleichanteilsfrei, d.h. deren zeitlicher Mittelwert ist immer gleich, insbesondere Null.

Beispielsweise können Leuchten mit weißen LEDs eine Manchester-Codierung aufweisen. Nachteilig daran ist, dass der für die weißen LEDs meist eingesetzte Phosphor eine Trägheit aufweist und nachglüht. Dies bringt eine gewisse Langsamkeit und/oder Signalverschleifung mit sich. Daher muss zwischen den Informationseinheiten ein gewisser zeitlicher Abstand eingehalten werden, was zu einer relativ geringen Datenübertagungsmenge führt.

Auch führt das Verfahren zu einer schlechten elektromagnetischen Verträglichkeit (EMV) der LED-Ansteuerung.

Zudem werden die elektrischen Bauteile belastet, da die LEDs permanent ein und aus geschalten werden.

US 2015/0003837 A1 offenbart eine Beleuchtungsvorrichtung gemäß dem Oberbegriff des Anspruchs 1. WO 2016/128967 A1 betrifft ein optisches, maschinenlesbares Etikett, bei dem optisch Daten übertragen werden.

Es ist daher eine Aufgabe der Erfindung, eine Beleuchtungsvorrichtung sowie ein Verfahren zum Übertragen von Informationseinheiten zu schaffen, mit der/dem Informationseinheiten bei gleichbleibender Helligkeit übertragen werden.

Die Lösung dieser Aufgabe erfolgt durch die Gegenstände sowie das Verfahren der unabhängigen Ansprüche.

Erfindungsgemäß ist eine Beleuchtungsvorrichtung, insbesondere Ladenbeleuchtung, vorgesehen. Der Hauptzweck ist somit die Beleuchtung eines Objekts bzw. mehrerer Objekte und nicht etwa ein reiner Austausch von Informationen, wie es z.B. bei Kommunikationsvorrichtungen der Fall ist.

Das Übertragen von Informationseinheiten stellt gewissermaßen eine Zusatzfunktion der Beleuchtungsvorrichtung dar.

Die Beleuchtungsvorrichtung weist wenigstens zwei, Licht unterschiedlicher Farbe emittierende, individuell ansteuerbare Lichtquellen, vorzugsweise LEDs auf. Beispielsweise kann wenigstens eine rote, grüne, blaue, cyan, magenta, gelbe oder weiße LED vorgesehen sein.

Beispielsweise kann das Licht mittels einer Gruppenbildung von LEDs erzeugt werden. Die LEDs können jeweils z.B. nur einen einfarbigen Chip aufweisen. Alternativ oder zusätzlich können die LEDs auch mehrere unterschiedlich farbige Chips aufweisen.

Das Spektrum der Lichtquelle, insbesondere Weiß, kann insbesondere durch Mischung mit mindestens einem zusätzlichen Wellenlängenbereich verändert werden.

Vorzugsweise bleibt die Intensität des Weißlichts gleich.

Zur Übertragung von Informationseinheiten werden insbesondere lediglich farbige LEDs eingesetzt. Im Gegensatz zu weißen LEDs mit Phosphor glühen diese nicht nach, sodass ein geringer zeitlicher Abstand zwischen den Informationseinheiten und/oder höhere Frequenzen möglich sind. Auf diese Weise ist eine relativ große Datenübertagungsmenge möglich.

Grundsätzlich ist es jedoch auch möglich, weißes Licht mit einem farbigen Licht zur Übertragung von Informationseinheiten zu verwenden.

Es ist eine Steuerungsvorrichtung vorgesehen, die dazu ausgebildet ist, mittels der Lichtquellen Informationseinheiten zu übertragen bzw. zu emittieren.

Als Steuerungsvorrichtung kann z.B. ein Steuerungs-IC vorgesehen sein.

Erfindungsgemäß umfasst eine Informationseinheit eine Helligkeitserhöhung eines ersten Wellenlängenbereichs bei gleichzeitiger Helligkeitserniedrigung eines zweiten Wellenlängenbereichs sowie eine anschließende Helligkeitserniedrigung des ersten Wellenlängenbereichs bei gleichzeitiger Helligkeitserhöhung des zweiten Wellenlängenbereichs bzw. besteht daraus.

Die Helligkeitserhöhung bzw. Helligkeitserniedrigung bezieht sich stets auf ein Grundniveau, bei dem keine Informationseinheiten übertragen werden. So liegt der Helligkeitswert bei einer Helligkeitserhöhung höher als das Grundniveau und bei einer Helligkeitserniedrigung unterhalb des Grundniveaus.

Die Helligkeitserhöhung kann z.B. zwischen 5 % und 90 %, vorzugsweise zwischen 20 % und 60 %, z.B. bei 40 %, liegen.

Die Helligkeitserniedrigung kann z.B. zwischen 5 % und 90 %, vorzugsweise zwischen 20 % und 60 %, z.B. bei 40 %, liegen.

Vorzugsweise sind die Helligkeitserhöhung und die Helligkeitserniedrigung gleich groß. So kann z.B. die Helligkeit des ersten Wellenlängenbereichs um 40 % erhöht werden, während die Helligkeit des zweiten Wellenlängenbereichs um 40 % erniedrigt wird.

Auch die anschließende Helligkeitserniedrigung bzw. Helligkeitserhöhung kann - bezogen auf das Grundniveau - um denselben Anteil, z.B. 40 %, erfolgen.

Der Wellenlängenbereich wird insbesondere durch die dominante Wellenlänge charakterisiert, welche quasi der Trägerfrequenz entspricht.

Das Licht wird insbesondere durch ein definiertes Umschalten zwischen zwei Trägerfrequenzen moduliert, was quasi einem optischen Analogon einer funktechnischen Frequenzmodulation entspricht.

Als Informationseinheit ist ein Bit, z.B. "0" oder"1", zu verstehen. Es kann bereits eine Informationseinheit ausreichend sein, um beispielsweise einen einzelnen Steuerbefehl zu übertragen. Vorzugsweise wird jedoch eine Vielzahl an Informationseinheiten übertragen. So können z.B. auch komplexe Steuerbefehle übertragen werden.

Erfindungsgemäß werden mindestens zwei Wellenlängenbereiche, insbesondere gleichzeitig, moduliert. Vorzugsweise umfasst jede Informationseinheit jeweils eine entgegengesetzte Helligkeitserhöhung sowie Helligkeitserniedrigung von zwei Wellenlängenbereichen.

In Summe weist jede Informationseinheit, also z.B. jedes Bit, vorzugsweise eine stabile Farbe und/oder stabile Helligkeit auf. Gemittelt über den Zeitraum, in dem eine Informationseinheit gesendet wird, schwankt die Farbe und/oder Helligkeit in der Summe beispielsweise nicht. Vorzugsweise sind die Informationseinheiten somit insgesamt jeweils farbstabil.

Die Übertragung einer Informationseinheit ist insbesondere gleichanteilsfrei, also insbesondere gleichanteilsfrei in der Helligkeit und zugleich gleichanteilsfrei in der Farbe. Vorzugsweise ist sogar jede halbe Informationseinheit bereits gleichanteilsfrei, also insbesondere gleichanteilsfrei in der Helligkeit.

Die digitale Information steckt insbesondere nicht in der Höhe des Signals, sondern in der zunächst ansteigenden bzw. abfallenden Signalflanke. Erkennbare Farbverschiebungen können z.B. durch die Gleichanteilsfreiheit mit Frequenzen über 100 Hz vermieden werden.

Die Wahrnehmbarkeit eines Betrachters reicht bis etwa 100 Hz, sodass vorzugsweise höhere Frequenzen, beispielsweise ab 100 Hz oder 500 Hz bzw. im kHz-Bereich verwendet werden.

Insgesamt bleibt die Helligkeit und/oder Farbe des von der Beleuchtungsvorrichtung ausgesandten Lichts auch bei der Übertragung einer oder mehrerer Informationseinheiten gleich, insbesondere auch wenn über einen längeren Zeitraum nur digitale Nullen bzw. nur digitale Einsen übertragen werden. So entstehen insbesondere keine Farbverschiebungen.

Dies liegt daran, dass eine Helligkeitserhöhung stets mit einer gleichzeitigen Helligkeitserniedrigung einhergeht bzw. dass eine Helligkeitserniedrigung stets mit einer gleichzeitigen Helligkeitserhöhung einhergeht.

Auf diese Weise entsteht insbesondere kein nachteiliges Flackern oder dergleichen. Einem menschlichen Betrachter fällt es folglich nicht auf, wenn Informationen übertragen werden. Dies ist besonders vorteilhaft, zumal die Beleuchtungsvorrichtung in erster Linie eine gleichmäßige und/oder störungsfreie Beleuchtung bereitstellen soll.

Durch eine ausgleichende Steuerung bleibt der Gesamtstrom insbesondere zumindest nahezu unverändert.

Dies führt insbesondere zu einer guten elektromagnetischen Verträglichkeit. Die elektrischen Bauteile, insbesondere die Treiber, werden nur wenig belastet.

Die Beleuchtungsvorrichtung kann durch das Übertragen von Informationseinheiten quasi als Transmitter von Daten ausgebildet sein. Zum Übertragen der Informationseinheiten wird das ohnehin vorhandene Licht verwendet, sodass insbesondere kein weiteres Medium für die Datenübertragung notwendig ist.

Das Übertragen an einen Empfänger kann mono- oder bidirektional erfolgen. So kann die Beleuchtungsvorrichtung z.B. lediglich als Sender von Informationseinheiten dienen oder aber auch Informationseinheiten empfangen.

Insbesondere können Informationseinheiten zwischen zwei oder mehreren Beleuchtungsvorrichtungen bzw. anderen Objekten ausgetauscht werden.

Die Beleuchtungsvorrichtung kann insbesondere als Ladenbeleuchtung ausgebildet sein. Beispielsweise können Regalbeleuchtungen untereinander kommunizieren bzw. Steuerungsbefehle, welche z.B. lichttechnische Eigenschaften betreffen, untereinander austauschen bzw. weitergeben. So kann z.B. ein Steuerungsbefehl, das Licht zu dimmen, von einer Regalbeleuchtung zur nächsten Regalbeleuchtung weitergegeben werden, bis sämtliche Regalbeleuchtungen gedimmt sind.

Auch ist z.B. die Anwendung als elektrisches Preisschild denkbar. So kann das Preisschild beispielsweise Informationseinheiten empfangen und daraufhin den Preis entsprechend anpassen.

Daneben sind auch zahlreiche weitere Anwendungsmöglichkeiten denkbar, bei denen eine gute Lichtqualität, insbesondere eine gleichbleibende Helligkeit und/oder gleichbleibende Farbe während der Datenübertragung, wichtig ist und optisch Daten übertragen werden sollen.

Beispielsweise kann die Beleuchtungsvorrichtung im Retail, z.B. Supermarkt, Discounter, Bäckerei, Metzgerei, Käseladen, Obstladen, Gemüseladen, Blumenladen, Marktstand und/oder Modegeschäft, eingesetzt werden.

Die Beleuchtungsvorrichtung kann in Außenbereichen und/oder Innenbereichen eingesetzt werden, z.B. in Büros, Gaststätten, Hotels oder Häusern. Auch kann die Beleuchtungsvorrichtung als Umfeldbeleuchtung ausgebildet sein.

Insbesondere kann die Beleuchtungsvorrichtung als ortsfeste Beleuchtung dienen. Daneben kann die Beleuchtungsvorrichtung auch beweglich und/oder tragbar ausgebildet sein.

Grundsätzlich ist es mit der erfindungsgemäßen Beleuchtungsvorrichtung in sämtlichen Bereichen möglich, auf einfache Weise eine Beleuchtung bereit zu stellen und Informationseinheiten zu übertragen.

Eine zweite Informationseinheit umfasst eine Helligkeitserniedrigung des ersten Wellenlängenbereichs bei gleichzeitiger Helligkeitserhöhung des zweiten Wellenlängenbereichs sowie eine anschließende Helligkeitserhöhung des ersten Wellenlängenbereichs bei gleichzeitiger Helligkeitserniedrigung des zweiten Wellenlängenbereichs bzw. besteht daraus.

Die erste und die zweite Informationseinheit haben somit gewissermaßen eine entgegengesetzte Signatur. Auf diese Weise können die erste und die zweite Informationseinheit gut voneinander unterschieden werden.

So kann die erste Informationseinheit beispielsweise eine "0" repräsentieren, während die zweite Informationseinheit für eine "1" steht bzw. umgekehrt.

Weiterbildungen der Erfindung sind auch den abhängigen Ansprüchen, der Beschreibung sowie den beigefügten Zeichnungen zu entnehmen.

Nach einer Ausführungsform sind die unterschiedlichen Farben zueinander komplementäre Farben. Beispielsweise kann dadurch insgesamt eine farbneutrale Beleuchtung erfolgen.

So kann eine Lichtquelle z.B. gelbes Licht und eine andere Lichtquelle blaues Licht emittieren. Alternativ oder zusätzlich kann eine Lichtquelle z.B. rotes Licht und eine andere Lichtquelle grünes Licht emittieren.

Insbesondere können die Lichtquellen jeweils paarweise komplementäres Licht aussenden.

Es ist jedoch nicht zwingend, dass die unterschiedlichen Farben komplementär zueinander sind. Grundsätzlich sind beliebige Farben denkbar.

Vorzugsweise werden genau zwei unterschiedliche Farben zur Informationsübertragung genutzt. Alternativ können auch mehrere, z.B. vier, sechs, acht, zehn oder mehr, Farben genutzt werden. Dabei kann die Menge an pro Zeiteinheit übertragenen Daten deutlich erhöht werden. Jedoch sind für die Auswertung mehr bzw. bessere Sensoren notwendig.

Gemäß einer weiteren Ausführungsform ist wenigstens eine weitere, weißes Licht emittierende Lichtquelle, vorzugsweise LED, vorgesehen.

So kann insbesondere ein statisches Grundlicht zugemischt werden. Insbesondere kann dadurch die Haupthelligkeit der Beleuchtungsvorrichtung bereitgestellt und/oder die allgemeine Lichtqualität verbessert werden.

Das weiße Licht kann z.B. mittels eines blauen Chips mit Phosphor erzeugt werden. Insbesondere kann gelber Phosphor bzw. ein Gemisch aus grünem, gelbem und rotem Phosphor vorgesehen sein.

Nach einer weiteren Ausführungsform ist eine Auswertevorrichtung zum Auswerten von mittels einer anderen Beleuchtungsvorrichtung gesendeten Informationseinheiten vorgesehen. Die Beleuchtungsvorrichtung kann hierbei insbesondere bidirektional ausgebildet sein, d.h. diese kann sowohl Informationseinheiten senden als auch empfangen.

In der Beleuchtungsvorrichtung sind in diesem Fall Sender und Empfänger verbaut.

Gemäß einer weiteren Ausführungsform umfasst die Auswertevorrichtung zumindest einen Sensor.

Der Sensor ist insbesondere dazu ausgebildet, das gesamte, einfallende Licht spektral zu trennen und/oder mindestens einen zur Datenübertragung genutzten Wellenlängenbereich auswerten können.

Beispielsweise können zwei, drei, vier oder mehr Sensoren vorgesehen sein. Um einen Empfang der Informationseinheiten in allen vier Himmelsrichtungen zu ermöglichen, können z.B. vier Sensoren, insbesondere mit je zwei Photodioden, vorgesehen sein.

Nach einer weiteren Ausführungsform umfasst zumindest ein Sensor, vorzugsweise sämtliche Sensoren, wenigstens einen Farbfilter.

Beispielsweise kann der Sensor einen Fotowiderstand mit Farbfilter und/oder eine Sensordiode mit Farbfilter aufweisen.

Bei dem Filter kann es sich z.B. um einen subtraktiven Filter, z.B. in Cyan, Magenta oder Gelb, handeln.

Gemäß einer weiteren Ausführungsform umfasst zumindest ein Sensor, vorzugsweise sämtliche Sensoren, wenigstens eine Photodiode.

Beispielsweise kann pro Wellenlängenbereich eine Photodiode vorgesehen sein. Insbesondere sind zwei, drei, vier, fünf, sechs, sieben, acht, neun, zehn oder mehr Photodioden denkbar.

Nach einer weiteren Ausführungsform umfasst zumindest ein Sensor, vorzugsweise sämtliche Sensoren, ein Spektrometer.

Das Spektrometer kann insbesondere ein Prisma und/oder ein Interferenzgitter aufweisen. Beispielsweise ist ein Sensor-Array möglich.

Den Sensoren kann insbesondere ein IC-Verstärker nachgeschalten sein.

Das einfallende Licht kann somit spektral getrennt werden. Insbesondere können anschließend die zur Datenübertragung genutzten Wellenlängenbereiche ausgewertet werden.

Die für die Übertragung codierten Bits können nun wieder dekodiert werden. So können die Informationseinheiten wieder ausgelesen werden. Die Bits können anschließend weiterverarbeitet werden und z.B. einen Steuerungsbefehl auslösen. Auch kann z.B. eine übermittelte Nachricht ausgegeben werden.

Die Offenbarung betrifft auch eine Auswertevorrichtung zum Auswerten von mittels einer erfindungsgemäßen Beleuchtungsvorrichtung gesendeten Informationseinheiten.

Die Auswertevorrichtung selbst kann insbesondere lediglich als Empfänger dienen und z.B. selbst kein Signal emittieren. Insbesondere muss die Auswertevorrichtung nicht als Beleuchtungsvorrichtung ausgebildet sein.

Geleichwohl kann die Auswertevorrichtung dieselben Merkmale wie die beschriebene, in die Beleuchtungsvorrichtung integrierte Auswertevorrichtung aufweisen. Die Auswertevorrichtung kann grundsätzlich in beliebige Bauteile integriert sein. Das Bauteil kann dann z.B. über die Informationseinheit gesteuert werden bzw. Informationen erhalten.

Beispielsweise kann ein elektronisches Preisschild eine entsprechende Auswertevorrichtung aufweisen. Die Preise können dann je nach Bedarf, beispielsweise über eine Ladenbeleuchtung, abgeändert werden.

Auch kann z.B. ein Smartphone eine Auswertevorrichtung aufweisen. So können beispielsweise einem Kunden zusätzliche Produktinformationen, z.B. die Lage im Laden oder Angebote, z.B. Videos, auf das Smartphone übertragen und dort angezeigt werden. Auch kann z.B. eine Navigation durch einen Laden anhand der Informationseinheiten erfolgen.

Die Erfindung betrifft ferner ein Verfahren zum Übertragen von Informationseinheiten mit einer erfindungsgemäßen Beleuchtungsvorrichtung, insbesondere Ladenbeleuchtung.

Die Beleuchtungseinheit emittiert Licht mit wenigstens zwei unterschiedlichen Farben, wobei zum Übertragen einer Informationseinheit die Helligkeit eines ersten Wellenlängenbereichs erhöht und gleichzeitig die Helligkeit eines zweiten Wellenlängenbereichs erniedrigt wird und anschließend die Helligkeit des ersten Wellenlängenbereichs erniedrigt und gleichzeitig die Helligkeit des zweiten Wellenlängenbereichs erhöht wird.

Zum Übertragen einer zweiten Informationseinheit wird die Helligkeit eines zweiten Wellenlängenbereichs erhöht und gleichzeitig die Helligkeit eines ersten Wellenlängenbereichs erniedrigt und anschließend die Helligkeit des zweiten Wellenlängenbereichs erniedrigt und gleichzeitig die Helligkeit des ersten Wellenlängenbereichs erhöht.

Schließlich betrifft die Offenbarung auch ein Verfahren zum Auswerten von mittels einer erfindungsgemäßen Beleuchtungsvorrichtung gesendeten Informationseinheiten, vorzugsweise mittels einer Auswertevorrichtung Insbesondere kann die Auswertevorrichtung Helligkeitsveränderungen der Wellenlängenbereiche über die Zeit ermitteln.

Alle hier beschriebenen Ausführungsformen und Bauteile der Vorrichtungen sind insbesondere dazu ausgebildet, z.B. mittels einer Steuerungsvorrichtung, nach einem oder mehreren der hier beschriebenen Verfahren betrieben zu werden. Ferner können alle hier beschriebenen Ausführungsformen der Vorrichtungen sowie alle hier beschriebenen Ausführungsformen der Verfahren jeweils miteinander kombiniert werden, insbesondere auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine schematische Schnittansicht einer Ausführungsform zweier erfindungsgemäßer Beleuchtungsvorrichtungen,
- Fig. 2: eine schematische Schaltung einer erfindungsgemäßen Beleuchtungsvorrichtung,
- Fig. 3: einen Signalverlauf nach dem Manchester-Coding, und
- Fig. 4: einen Signalverlauf nach dem erfindungsgemäßen Verfahren.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Insbesondere ist die Anzahl an Lichtquellen grundsätzlich beliebig.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

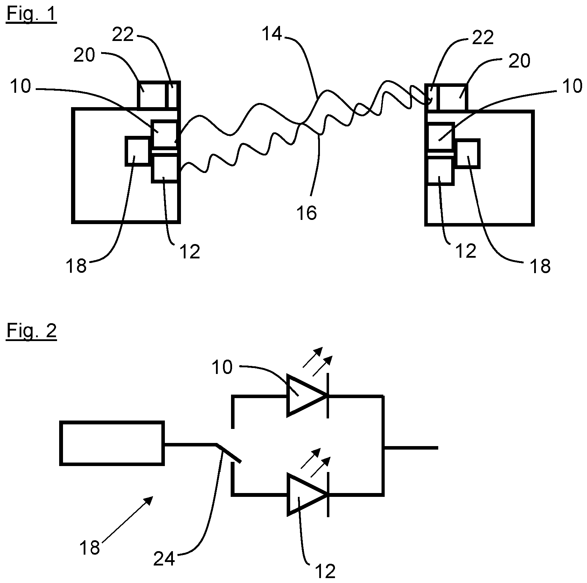

Fig. 1 zeigt zwei Beleuchtungsvorrichtungen, welche jeweils zwei Lichtquellen 10, 12 aufweisen. Die Lichtquellen 10, 12 emittieren Licht unterschiedlicher Farbe.

So kann die eine erste Lichtquelle 10 Licht mit einem ersten Wellenlängenbereich 14, z.B. gelb, aussenden, während die zweite Lichtquelle 12 Licht mit einem zweiten Wellenlängenbereich 16, z.B. blau, aussendet. Zur einfachen Darstellung ist lediglich die jeweils dominante Wellenlänge gezeigt. Die Wellenlängenbereiche 14, 16 können insbesondere komplementär zueinander sein.

Die Beleuchtungsvorrichtungen umfassen jeweils eine Steuerungsvorrichtung 18, welche die Lichtquellen 10, 12 steuert.

Eine Auswertevorrichtung 20 mit einem Sensor 22 kann das ausgesendete Licht empfangen und in die spektralen Bestandteile auflösen.

Zusätzlich zu den beiden Lichtquellen 10, 12 können auch weitere Lichtquellen vorgesehen sein. So kann z.B. weißes Licht emittiert werden, um die Lichtqualität insgesamt zu verbessern.

In Fig. 2 ist stark vereinfacht ein Teil einer Steuerungsvorrichtung 18 dargestellt. So kann ein Umschalter 24 vorgesehen sein, welcher den Strom in den einen oder den anderen Stromzweig lenken kann. Dadurch herrscht auch bei der Übertragung von Informationseinheiten 26, 28 immer der gleiche Stromfluss.

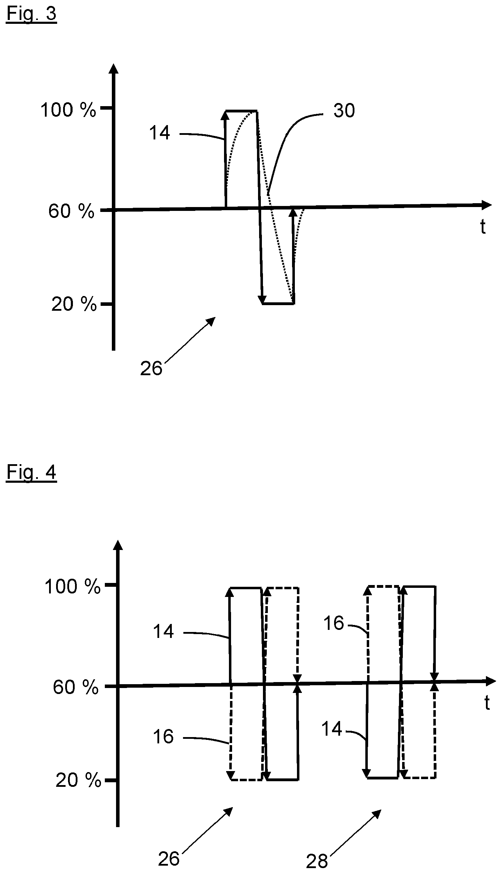

Fig. 3 zeigt einen Signalverlauf nach dem Manchester-Coding. In der X-Achse ist die Zeit t aufgetragen, während die Y-Achse der Helligkeit entspricht.

Die Helligkeit eines ersten Wellenlängenbereichs 14 kann, beispielsweise ausgehend von einer Helligkeit von 60 %, z.B. zunächst auf 100 % erhöht und anschließend auf 20 % erniedrigt werden. Es wird gewissermaßen die Amplitude moduliert.

Beim Manchester-Coding entspricht eine Erhöhung mit anschließender Erniedrigung einer Informationseinheit 26, z.B. einer digitalen Null. Der umgekehrte Fall, also eine Erniedrigung mit anschließender Erhöhung, kann einer weiteren Informationseinheit entsprechen, z.B. einer digitalen Eins.

Durch die Erhöhung mit anschließender Erniedrigung erhält man ein gleichanteilsfreies Signal, was insgesamt zu einer gleichbleibenden Farbe führt. Die Datenrate wird dadurch jedoch im Gegensatz zu Codierungen ohne anschließende Erniedrigung halbiert.

Wird weißes Licht 30 aus weißen LEDs eingesetzt, wie mit der gepunkteten Linie dargestellt ist, wird die Datenrate weiter verschlechtert. So glüht das bei weißen LEDs meist verwendete Phosphor nach, sodass ein gewisser Abstand zwischen den Informationseinheiten 26 gewahrt werden muss.

In Fig. 4 ist ein möglicher Signalverlauf nach dem erfindungsgemäßen Verfahren dargestellt. Zur besseren Sichtbarkeit wurden die Linien bewusst etwas schräg eingezeichnet, wobei diese in dieser Darstellung eigentlich rechtwinklig zur Zeitachse t verlaufen und sich somit zumindest teilweise überdecken würden.

Eine erste Informationseinheit 26, welche beispielsweise eine digitale Null darstellt, entspricht einer Helligkeitserhöhung eines ersten Wellenlängenbereichs 14 bei gleichzeitiger Helligkeitserniedrigung eines zweiten Wellenlängenbereichs 16 (gestrichelt dargestellt) sowie einer anschließenden Helligkeitserniedrigung des ersten Wellenlängenbereichs 14 bei gleichzeitiger Helligkeitserhöhung des zweiten Wellenlängenbereichs 16.

Bei der Helligkeitserhöhung ist der Helligkeitswert höher als ein Grundniveau, bei dem keine Informationseinheiten übertragen werden. Bei der Helligkeitserniedrigung ist der Helligkeitswert hingegen niedriger als das Grundniveau.

Die Helligkeiten kehren anschließend wieder auf das Grundniveau zurück.

Beispielsweise kann sich der Anteil an gelbem Licht erhöhen und der Anteil an blauem Licht erniedrigen. Anschließend kann sich der Anteil an blauem Licht erhöhen und der Anteil an gelbem Licht erniedrigen. Schließlich können die Anteile der Farben wieder den Ausgangswert, also das Grundniveau, annehmen.

Die beiden Farben können insbesondere komplementär zueinander sein. Dies ist jedoch nicht notwendig.

Durch die Bildung eines Farbpaars werden als Vorteile eine gleichbleibende Helligkeit, eine gleichbleibende Farbe, ein geringes EMV sowie nur eine geringe Treiberbelastung erzielt. Die Datenrate bzw. Bandbreite ist jedoch nur halb so hoch wie z.B. bei Li-Fi-Leuchten, die jede Farbe als unabhängigen, vollwerteigen Datenkanal nutzen.

Eine zweite Informationseinheit 28, welche beispielsweise eine digitale Eins darstellt, entspricht einer Helligkeitserniedrigung des ersten Wellenlängenbereichs 14 bei gleichzeitiger Helligkeitserhöhung des zweiten Wellenlängenbereichs 16 sowie einer anschließenden Helligkeitserhöhung des ersten Wellenlängenbereichs 14 bei gleichzeitiger Helligkeitserniedrigung des zweiten Wellenlängenbereichs 16.

Jede Informationseinheit 26, 28 ist gleichanteilsfrei. Auch ist bereits jede halbe Informationseinheit 26, 28 für sich gleichanteilsfrei.

Die Informationseinheiten 26, 28 können auch unmittelbar nacheinander, ohne eine dazwischenliegende, zeitliche Lücke, ausgesendet werden. Auch die Reihenfolge ist grundsätzlich beliebig und entspricht den zu übertragenden Daten bzw. Steuerungsbefehlen. So können z.B. auch zwei erste Informationseinheiten 26 bzw. zwei zweite Informationseinheiten 28 nebeneinander angeordnet sein.

Die Informationseinheiten 26, 28 sind zeitlich insbesondere deutlich kürzer als eine Augenerkennungszeit. So werden diese nicht von einem Betrachter wahrgenommen.

### Bezugszeichenliste

- 10: erste Lichtquelle
- 12: zweite Lichtquelle
- 14: erster Wellenlängenbereich
- 16: zweiter Wellenlängenbereich
- 18: Steuerungsvorrichtung
- 20: Auswertevorrichtung
- 22: Sensor
- 24: Umschalter
- 26: erste Informationseinheit
- 28: zweite Informationseinheit
- 30: weißes Licht

- t: Zeit

## Patentansprüche

1. Beleuchtungsvorrichtung, insbesondere Ladenbeleuchtung, aufweisend wenigstens zwei, Licht unterschiedlicher Farbe emittierende, individuell ansteuerbare Lichtquellen (10, 12), vorzugsweise LEDs, und
eine Steuerungsvorrichtung (18), die dazu ausgebildet ist, mittels der Lichtquellen (10, 12) Informationseinheiten (26, 28) zu übertragen, wobei eine Informationseinheit (26) eine Helligkeitserhöhung eines ersten Wellenlängenbereichs (14) bei gleichzeitiger Helligkeitserniedrigung eines zweiten Wellenlängenbereichs (16) sowie eine anschließende Helligkeitserniedrigung des ersten Wellenlängenbereichs (14) bei gleichzeitiger Helligkeitserhöhung des zweiten Wellenlängenbereichs (16) umfasst.
**dadurch gekennzeichnet,**
**dass** eine zweite Informationseinheit (28) eine Helligkeitserniedrigung des ersten Wellenlängenbereichs (14) bei gleichzeitiger Helligkeitserhöhung des zweiten Wellenlängenbereichs (16) sowie eine anschließende Helligkeitserhöhung des ersten Wellenlängenbereichs (14) bei gleichzeitiger Helligkeitserniedrigung des zweiten Wellenlängenbereichs (16) umfasst, wobei als Informationseinheit ein Bit zu verstehen ist.

2. Beleuchtungsvorrichtung nach Anspruch 1,
**dadurch gekennzeichnet,**
**dass** bei der Helligkeitserhöhung der Helligkeitswert höher ist als ein Grundniveau, bei dem keine Informationseinheiten übertragen werden und/oder dass bei der Helligkeitserniedrigung der Helligkeitswert niedriger ist als das Grundniveau, vorzugsweise wobei die Helligkeiten anschließend wieder auf das Grundniveau zurückkehren.

3. Beleuchtungsvorrichtung nach Anspruch 1 oder 2,
**dadurch gekennzeichnet,**
**dass** die unterschiedlichen Farben zueinander komplementäre Farben sind.

4. Beleuchtungsvorrichtung nach einem der vorhergehenden Ansprüche, **dadurch gekennzeichnet,**
**dass** wenigstens eine weitere, weißes Licht emittierende Lichtquelle, vorzugsweise LED, vorgesehen ist.

5. Beleuchtungsvorrichtung nach einem der vorhergehenden Ansprüche, **dadurch gekennzeichnet,**
**dass** eine Auswertevorrichtung (20) zum Auswerten von mittels einer anderen Beleuchtungsvorrichtung gesendeten Informationseinheiten (26, 28) vorgesehen ist.

6. Beleuchtungsvorrichtung nach einem der vorhergehenden Ansprüche, **dadurch gekennzeichnet,**
**dass** die Auswertevorrichtung (20) zumindest einen Sensor (22) umfasst.

7. Beleuchtungsvorrichtung nach Anspruch 6,
**dadurch gekennzeichnet,**
**dass** zumindest ein Sensor (22), vorzugsweise sämtliche Sensoren, wenigstens einen Farbfilter umfasst.

8. Beleuchtungsvorrichtung nach Anspruch 6 oder 7,
**dadurch gekennzeichnet,**
**dass** zumindest ein Sensor (22), vorzugsweise sämtliche Sensoren, wenigstens eine Photodiode, vorzugsweise zwei Photodioden, umfasst.

9. Beleuchtungsvorrichtung nach einem der Ansprüche 6 bis 8,
**dadurch gekennzeichnet,**
**dass** zumindest ein Sensor (22), vorzugsweise sämtliche Sensoren, ein Spektrometer umfasst.

10. Verfahren zum Übertragen von Informationseinheiten (26, 28) mit einer Beleuchtungsvorrichtung, insbesondere Ladenbeleuchtung, nach einem der Ansprüche 1 bis 9, bei dem
die Beleuchtungseinheit Licht mit wenigstens zwei unterschiedlichen Farben emittiert, wobei
zum Übertragen einer Informationseinheit (26) die Helligkeit eines ersten Wellenlängenbereichs (14) erhöht und gleichzeitig die Helligkeit eines zweiten Wellenlängenbereichs (16) erniedrigt wird und anschließend die Helligkeit des ersten Wellenlängenbereichs (14) erniedrigt und gleichzeitig die Helligkeit des zweiten Wellenlängenbereichs (16) erhöht wird,
zum Übertragen einer zweiten Informationseinheit (28) die Helligkeit eines ersten Wellenlängenbereichs (14) erniedrigt und gleichzeitig die Helligkeit eines zweiten Wellenlängenbereichs (16) erhöht wird und anschließend die Helligkeit des ersten Wellenlängenbereichs (14) erhöht und gleichzeitig die Helligkeit des zweiten Wellenlängenbereichs (16) erniedrigt wird, wobei als Informationseinheit ein Bit zu verstehen ist.

## Claims

1. Lighting device, in particular shop lighting, comprising at least two separately controllable light sources (10, 12), preferably LEDs, that emit light of different colours, and a control device (18) configured to transmit units of information (26, 28) by means of the light sources (10, 12), wherein a unit of information (26) comprises an increase in brightness of a first wavelength range (14) combined with a simultaneous decrease in brightness of a second wavelength range (16) as well as a subsequent decrease in brightness of the first wavelength range (14) combined with a simultaneous increase in brightness of the second wavelength range (16), **characterised by** the fact that
a second unit of information (28) comprises a decrease in brightness of the first wavelength range (14) combined with a simultaneous increase in brightness of the second wavelength range (16) and a subsequent increase in brightness of the first wavelength range (14) combined with a simultaneous decrease in brightness of the second wavelength range (16), wherein a unit of information is to be understood as a bit.

2. Lighting device according to claim 1,
**characterised in that**
in the case of the increase in brightness, the brightness value is higher than a base level at which no units of information are transmitted and/or that, in the case of the decrease in brightness, the brightness value is lower than the base level, wherein preferably the brightnesses subsequently return to the base level.

3. Lighting device according to claims 1 or 2,
**characterised in that**
the different colours are complementary colours.

4. Lighting device according to any of the preceding claims, **characterised in that**
at least one further light source, preferably an LED, that emits white light is provided.

5. Lighting device according to any of the preceding claims, **characterised in that**
an evaluation device (20) for the purpose of evaluating units of information (26, 28) transmitted by means of a further lighting device is provided.

6. Lighting device according to any of the preceding claims, **characterised in that**
the evaluation device (20) comprises at least one sensor (22).

7. Lighting device according to claim 6,
**characterised in that**
at least one sensor (22), preferably all sensors, comprises at least one colour filter.

8. Lighting device according to claims 6 or 7,
**characterised in that**
at least one sensor (22), preferably all sensors, comprises at least one photodiode, preferably two photodiodes.

9. Lighting device according to any of claims 6 to 8,
**characterised in that**
at least one sensor (22), preferably all sensors, comprises a spectrometer.

10. Method for transmitting units of information (26, 28) with a lighting device, in particular shop lighting, according to any of claims 1 to 9, in which the lighting unit emits light of at least two different colours, wherein
for the purpose of transmitting a unit of information (26), the brightness of a first wavelength range (14) is increased and simultaneously the brightness of a second wavelength range (16) is decreased and subsequently the brightness of the first wavelength range (14) is decreased and simultaneously the brightness of the second wavelength range (16) is increased,
for the purpose of transmitting a second unit of information (28), the brightness of a first wavelength range (14) is decreased and simultaneously the brightness of a second wavelength range (16) is increased and subsequently the brightness of the first wavelength range (14) is increased and simultaneously the brightness of the second wavelength range (16) is decreased, wherein a unit of information is to be understood as a bit.

## Revendications

1. Dispositif d'éclairage, en particulier d'éclairage de magasin, comprenant au moins deux sources de lumière (10, 12), de préférence des DELs, émettant de la lumière de couleurs différentes et pouvant être pilotées individuellement, et
un dispositif de commande (18) qui est réalisé pour transmettre des unités d'information (26, 28) au moyen des sources de lumière (10, 12), une unité d'information (26) incluant une augmentation de la luminosité d'une première plage de longueur d'onde (14) avec une diminution simultanée de la luminosité d'une seconde plage de longueur d'onde (16), et ensuite une diminution de la luminosité de la première plage de longueur d'onde (14) avec une augmentation simultanée de la luminosité de la seconde plage de longueur d'onde (16),
**caractérisé en ce que**
une seconde unité d'information (28) inclut une diminution de la luminosité de la première plage de longueur d'onde (14) avec une augmentation simultanée de la luminosité de la seconde plage de longueur d'onde (16), et ensuite une augmentation de la luminosité de la première plage de longueur d'onde (14) avec une diminution simultanée de la luminosité de la seconde plage de longueur d'onde (16), en entendant comme unité d'information un bit.

2. Dispositif d'éclairage selon la revendication 1,
**caractérisé en ce que**
lors de l'augmentation de la luminosité, la valeur de luminosité est supérieure à un niveau de base auquel aucune unité d'information n'est transmise, et/ou **en ce que** lors de la diminution de la luminosité, la valeur de luminosité est inférieure au niveau de base, de préférence les luminosités retournant ensuite au niveau de base.

3. Dispositif d'éclairage selon la revendication 1 ou 2,
**caractérisé en ce que**
**que** les différentes couleurs sont des couleurs complémentaires les unes aux autres.

4. Dispositif d'éclairage selon l'une des revendications précédentes, **caractérisé en ce que**
il est prévu au moins une autre source de lumière, de préférence une DEL, émettant de la lumière blanche.

5. Dispositif d'éclairage selon l'une des revendications précédentes, **caractérisé en ce que**
il est prévu un dispositif d'évaluation (20) pour évaluer des unités d'information (26, 28) transmises au moyen d'un autre dispositif d'éclairage.

6. Dispositif d'éclairage selon l'une des revendications précédentes, **caractérisé en ce que**
le dispositif d'évaluation (20) comprend au moins un capteur (22).

7. Dispositif d'éclairage selon la revendication 6,
**caractérisé en ce que**
au moins un capteur (22), de préférence tous les capteurs, présente(nt) au moins un filtre couleur.

8. Dispositif d'éclairage selon la revendication 6 ou 7,
**caractérisé en ce que**
au moins un capteur (22), de préférence tous les capteurs, présente(nt) au moins une photodiode, de préférence deux photodiodes.

9. Dispositif d'éclairage selon l'une des revendications 6 à 8, **caractérisé en ce que**
au moins un capteur (22), de préférence tous les capteurs, présente(nt) un spectromètre.

10. Procédé de transmission d'unités d'information (26, 28) par un dispositif d'éclairage, en particulier d'éclairage de magasin, selon l'une des revendications 1 à 9, dans lequel
l'unité d'éclairage émet de la lumière avec au moins deux couleurs différentes,
pour transmettre une unité d'information (26), la luminosité d'une première plage de longueur d'onde (14) est augmentée et simultanément la luminosité d'une seconde plage de longueur d'onde (16) est diminuée, et ensuite la luminosité de la première plage de longueur d'onde (14) est diminuée et simultanément la luminosité de la seconde plage de longueur d'onde (16) est augmentée,
pour transmettre une seconde unité d'information (28), la luminosité d'une première plage de longueur d'onde (14) est diminuée et simultanément la luminosité d'une seconde plage de longueur d'onde (16) est augmentée, et ensuite la luminosité de la première plage de longueur d'onde (14) est augmentée et simultanément la luminosité de la seconde plage de longueur d'onde (16) est diminuée, en entendant comme unité d'information un bit.
